# EUROPEAN PATENT APPLICATION

(11) **EP 4 134 545 A1**
(43) Date of publication of application: **15.02.2023**
(21) Application number: 21812228.1
(22) Date of filing: 20.05.2021
(51) Int. Cl.: F03D 80/50, F03D 1/06

(54) **WIND TURBINE BLADE, WIND TURBINE, AND METHOD FOR MAINTAINING WIND TURBINE BLADE**

(30) Priority: 25.05.2020 JP 2020090321
(71) Applicant: Mitsubishi Heavy Industries, Ltd., Tokyo 100-8332 (JP)
(72) Inventor: TAKEUCHI, Hiroaki, Tokyo 100-8332 (JP); HIRANO, Toshiyuki, Tokyo 100-8332 (JP); SHIMIZU, Takayuki, Tokyo 100-8332 (JP); YOSHIZU, Shuhei, Tokyo 100-8332 (JP); FUJITA, Takeshi, Tokyo 100-8332 (JP); YUGE, Atsushi, Tokyo 100-8332 (JP)
(74) Representative: Hoffmann Eitle
(86) International application number: PCT/JP2021/019121
(87) International publication number: WO 2021/241385

(57) **Abstract**

A wind turbine blade includes: a blade body; and a leading edge protector covering a leading edge portion of the blade body. The leading edge protector includes: a body layer; and a coating layer having higher hardness than the body layer and at least partially covering a surface of the body layer.

## Description

### TECHNICAL FIELD

This disclosure relates to a wind turbine blade, a wind turbine, and a repair method for a wind turbine blade.

### BACKGROUND

For example, in a wind turbine used in a wind turbine power generating apparatus or the like, erosion damage occurs due to repeated collisions of raindrops, dust, etc., with a leading edge portion of a rotating wind turbine blade. In recent years, with an increase in the size of the wind turbine, the peripheral velocity at the blade tip of the wind turbine blade has increased, and the effect of erosion damage on the life of the wind turbine has become more significant.

For the purpose of suppressing such erosion damage, a leading edge protector (LEP) may be attached to the leading edge portion of the wind turbine blade where erosion damage is likely to occur. For example, Patent Document 1 discloses a technique for suppressing erosion damage by covering the leading edge portion of the wind turbine blade with a shield member on the blade tip side where the peripheral velocity of the wind turbine blade increases.

### Citation List

### Patent Literature

Patent Document 1: WO2018/219524A

### SUMMARY

### Problems to be Solved

A leading edge protector, such as the shield member of Patent Document 1, is provided at the leading edge portion of the wind turbine blade. Here, when the leading edge protector is made of a material having a predetermined thickness, such as a plate material, to have excellent erosion resistance performance, it is necessary to bend the material into a shape corresponding to the leading edge portion. Since the leading edge portion has a curved shape that takes into account the aerodynamic performance of the wind turbine blade, if a hard material with excellent wear resistance is used, it is not easy to process.

At least one embodiment of the present disclosure was made in view of the above problems, and an object thereof is to provide a wind turbine blade that can be easily manufactured while ensuring good erosion resistance performance, a wind turbine blade including the wind turbine blade, and a repair method for a wind turbine blade.

### Solution to the Problems

In order to solve the above problems, a wind turbine blade according to at least one embodiment of the present disclosure includes: a blade body; and a leading edge protector covering a leading edge portion of the blade body. The leading edge protector includes: a body layer; and a coating layer having higher hardness than the body layer and at least partially covering a surface of the body layer.

In order to solve the above problems, a wind turbine according to at least one embodiment of the present disclosure includes the wind turbine blade according to at least one embodiment of the present disclosure.

In order to solve the above problems, a repair method for a wind turbine blade according to at least one embodiment of the present disclosure includes, for repairing a wind turbine blade including a blade body; and a leading edge protector covering a leading edge portion of the blade body, the leading edge protector including: a body layer; and a coating layer having higher hardness than the body layer and at least partially covering a surface of the body layer, a step of inserting a repair material having a longitudinal shape into a damaged portion generated in the leading edge protector; a step of deforming the repair material into a shape corresponding to the damaged portion by compressing the repair material from outside the damaged portion; and a step of removing excess of the repair material that is exposed from the damaged portion.

### Advantageous Effects

At least one embodiment of the present disclosure provides a wind turbine blade that can be easily manufactured while ensuring good erosion resistance performance, a wind turbine blade including the wind turbine blade, and a repair method for a wind turbine blade.

### BRIEF DESCRIPTION OF DRAWINGS

FIG. 1 is a schematic overall configuration diagram of a wind turbine according to an embodiment.
FIG. 2 is a schematic diagram showing the blade tip portion side of the wind turbine blade according to an embodiment.
FIG. 3 is a cross-sectional view taken along line A-A in FIG. 2 according to an embodiment.
FIG. 4 is an enlarged perspective view showing the surface state of an aluminum alloy that has been anodized.
FIG. 5 is a cross-sectional view taken along line A-A in FIG. 2 according to another embodiment.
FIG. 6 is a schematic diagram showing the blade tip portion side of the wind turbine blade according to another embodiment.
FIG. 7A is a cross-sectional view taken along line C-C in FIG. 6 according to an embodiment.
FIG. 7B is a cross-sectional view taken along line C-C in FIG. 6 according to another embodiment.
FIG. 7C is a cross-sectional view taken along line C-C in FIG. 6 according to another embodiment.
FIG. 8A is an enlarged cross-sectional view showing a variation of the region D in FIG. 7A according to an embodiment.
FIG. 8B is an enlarged cross-sectional view showing a variation of the region D in FIG. 7A according to another embodiment.
FIG. 8C is an enlarged cross-sectional view showing a variation of the region D in FIG. 7A according to another embodiment.
FIG. 9 is a schematic cross-sectional view taken along line A-A in FIG. 2 according to another embodiment.
FIG. 10 is a schematic cross-sectional view taken along line A-A in FIG. 2 according to another embodiment.
FIG. 11 is a perspective view of a leading edge protector provided at a leading edge portion of a blade body according to an embodiment.
FIG. 12 is a cross-sectional view taken along line E-E in FIG. 11.
FIG. 13 is a schematic diagram showing the blade tip portion side of the wind turbine blade according to another embodiment.
FIG. 14 is a flowchart showing steps of a repair method for a wind turbine blade according to an embodiment.
FIG. 15A is a diagram of each step of FIG. 14.
FIG. 15B is a diagram of each step of FIG. 14.
FIG. 15C is a diagram of each step of FIG. 14.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

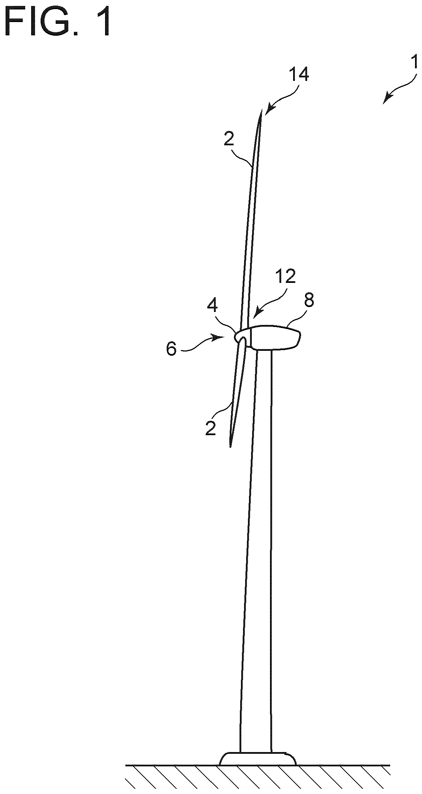

First, a configuration of a wind turbine 1 according to at least one embodiment of the present disclosure will be described. FIG. 1 is a schematic overall configuration diagram of the wind turbine 1 according to an embodiment.

The wind turbine 1 includes at least one wind turbine blade 2. The wind turbine blade 2 is attached to a hub 4 to form a wind turbine rotor 6 that is rotatable around the rotation axis together with the hub 4. In the wind turbine rotor 6 of the wind turbine 1 shown in FIG. 1, three wind turbine blades 2 are attached to the hub 4 around the rotation axis at equal intervals. Each wind turbine blade 2 has a blade root portion 12 connected to the hub 4 and a blade tip portion 14 opposite to the blade root portion 12 in the blade longitudinal direction. The wind turbine rotor 6 is rotatably attached to a nacelle 8 pivotably provided on a tower 10. In the wind turbine 1 having such a configuration, when the wind hits the wind turbine blades 2, the wind turbine rotor 6 including the wind turbine blades 2 and the hub 4 rotates around the rotation axis.

The wind turbine 1 may be configured as a wind power generating apparatus. In this case, the nacelle 8 accommodates a generator and a power transmission mechanism for transmitting the rotation of the wind turbine rotor 6 to the generator. In the wind turbine 1, the rotation energy transmitted from the wind turbine rotor 6 to the generator through the power transmission mechanism is converted into electric energy by the generator.

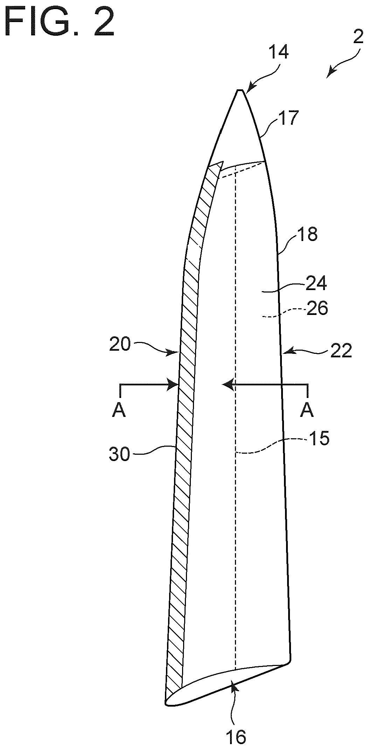

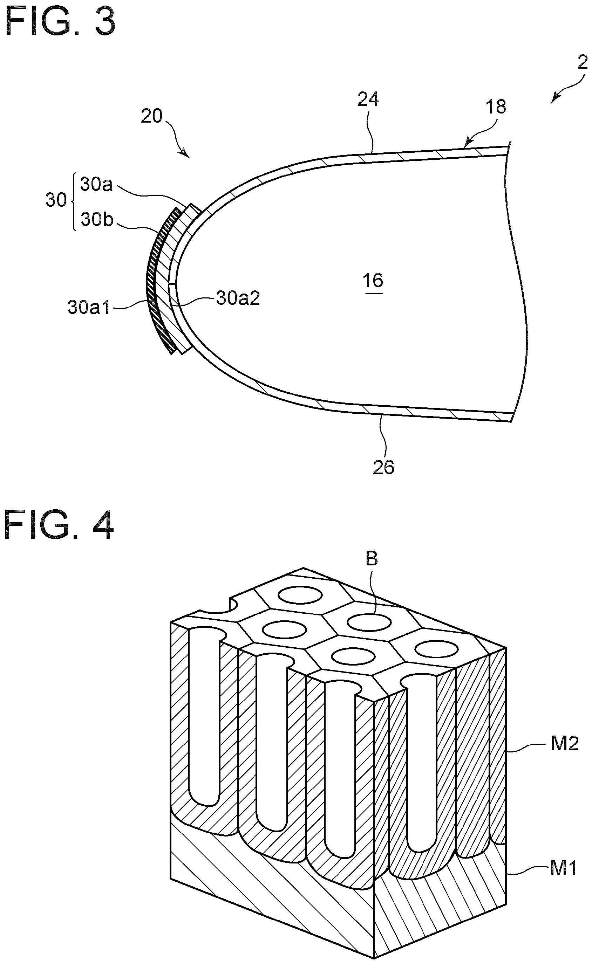

FIG. 2 is a schematic diagram showing the blade tip portion 14 side of the wind turbine blade 2 according to an embodiment. FIG. 3 is a cross-sectional view taken along line A-A in FIG. 2 according to an embodiment.

The wind turbine blade 2 has a blade body 18. The blade body 18 extends from the blade root portion 12 (see FIG. 1) to the blade tip portion 14 along the blade longitudinal direction, and includes a leading edge portion 20 disposed on the front side in the blade chord direction and a trailing edge portion 22 disposed on the rear side in the blade chord direction.

The blade body 18 has a skin including fiber-reinforced plastic. The fiber-reinforced plastic that makes up the skin may be, for example, glass fiber reinforced plastic (GFRP) or carbon fiber reinforced plastic (CFRP).

In this embodiment, the blade body 18 includes a suction-side skin 24 and a pressure-side skin 26 opposite to each other. The suction-side skin 24 and the pressure-side skin 26 are connected to each other in the leading edge portion 20 and the trailing edge portion 22 of the blade body 18 to form a hollow space 16 surrounded by the skin inside the blade body 18.

In the leading edge portion 20 and the trailing edge portion 22, the suction-side skin 24 and the pressure-side skin 26 are secured together, for example, by being glued with an adhesive or the like.

Inside the hollow space 16, a down-conductor 15 is disposed. The down-conductor 15 includes a conductive material and constitutes at least part of a path for the lightning current generated in the wind turbine blade 2 due to lightning strike to the wind turbine 1. The down-conductor 15 extends inside the hollow space 16 along the blade longitudinal direction from a tip receptor 17 provided in the blade tip portion 14 and is electrically connected to a ground wire (not shown) provided at a side of the blade root portion 12.

The wind turbine blade 2 includes a leading edge protector 30. The leading edge protector 30 covers the leading edge portion 20 to protect the leading edge portion 20 from raindrops, dust, etc., during operation of the wind turbine 1, thus protecting the blade body 18 from erosion damage.

As shown in FIG. 3, the leading edge protector 30 includes a body layer 30a and a coating layer 30b. The body layer 30a is the main component of the leading edge protector 30 and has a curved shape corresponding to the leading edge portion 20. The coating layer 30b is disposed on the upper layer side of the body layer 30a so as to at least partially cover the surface of the body layer 30a, and has higher hardness than the body layer 30a.

In such a leading edge protector 30, for example, the body layer 30a includes a soft material (with lower hardness than the coating layer 30b). Such a material is formable due to low hardness and can be easily bent in conformity with the leading edge portion 20. In contrast, the coating layer 30b is formed on the body layer 30a as a layer having higher hardness than the body layer 30a by thermal spraying, PVD, electroplating, or the like using a hard metal material such as TiN, DLC, or NiP. Thus, by processing the soft body layer 30a into a shape corresponding to the leading edge portion 20 and then forming the hard coating layer 30b, it is possible to achieve both good workability and erosion resistance.

Additionally, the material that makes up the body layer 30a may have conductivity. In this case, a soft and highly conductive metal material such as an aluminum alloy may be used. If the body layer 30a is composed of a conductive member, for example, by electrically connecting the body layer 30a to the down-conductor 15, the leading edge protector 30 serves as at least part of the path for the lightning current generated in the wind turbine blade 2 due to lightning strike to the wind turbine 1, so it is possible to effectively improve the lightning resistance performance of the wind turbine blade 2.

In FIG. 3, the coating layer 30b is formed on an outer surface 30a1 of the body layer 30a facing the outside. Thereby, during operation of the wind turbine blade 2, the coating layer 30b receives raindrops, sand dust, etc., flying from the outside, and thus the coating layer 30b protects the soft body layer 30a, resulting in good erosion performance.

At least one of the outer surface 30a of the body layer 30a or the surface of the blade body 18, which touches the coating layer 30b, may be surface-treated to improve the adhesion of the coating layer 30b. For example, when the body layer 30a is made of an aluminum alloy as described above, the outer surface 30a of the body layer 30a may be anodized to improve the adhesion of the coating layer 30b.

FIG. 4 is an enlarged perspective view showing the surface state of an aluminum alloy that has been anodized. An alumite layer M2 formed by anodizing is formed on the surface of the aluminum alloy M1. The alumite layer M2 has a structure in which many fine bores B are formed in a bulk body. The diameter of each bore B is, for example, several tens of nm, and billions to hundreds of millions of bores B are included per cm³. By forming the coating layer 30b on the surface of the aluminum alloy thus anodized, the coating layer 30b enters the numerous bores B of the alumite layer M2, improving the adhesion of the coating layer 30b.

Additionally, an inner surface 30a2 of the body layer 30a facing the leading edge portion 20 may also be anodized in the same manner as the outer surface 30a1. In this case, by anodizing the outer surface 30a1, which touches the skin of the blade body 18, to improve the adhesion between the skin and the body layer 30a, it is possible to effectively prevent the leading edge protector 30 from separating from the skin.

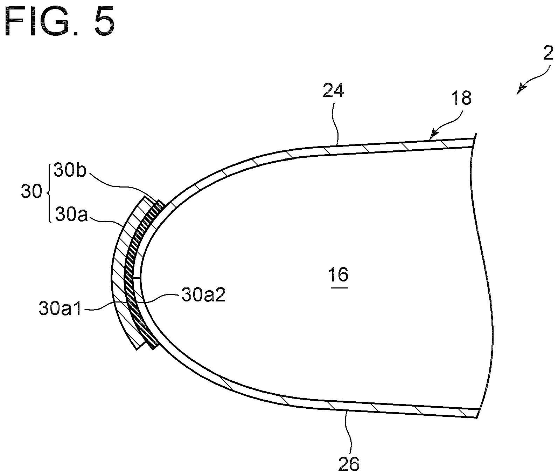

Here, FIG. 5 is a cross-sectional view taken along line A-A in FIG. 2 according to another embodiment. In this embodiment, the coating layer 30b is formed on the inner surface 30a2 of the body layer 30a facing the leading edge portion 20. That is, in this embodiment, the coating layer 30b is interposed between the body layer 30a and the skin (suction-side skin 24 and pressure-side skin 26) of the blade body 18 in the leading edge portion 20 of the blade body 18.

In this case, the coating layer 30b may be made of a material that can improve the adhesion of the leading edge protector 30 to the blade body 18. Thereby, the body layer 30a can be well secured to the skin of the blade body 18 via the coating layer 30b, and the wind turbine blade 2 with high reliability can be obtained with little risk of separating or falling off of the leading edge protector 30.

The leading edge protector 30 having such configuration may be provided over a predetermined region of the leading edge portion 20 of the blade body 18 on the blade tip portion 14 side. The blade tip portion 14 side of the leading edge portion 20 is more prone to erosion damage due to the increased peripheral velocity, and it is more likely to be struck by lightning due to the elevated location. Therefore, by providing the leading edge protector 30 over this region, it is possible to effectively suppress erosion damage and improve the lightning resistance performance.

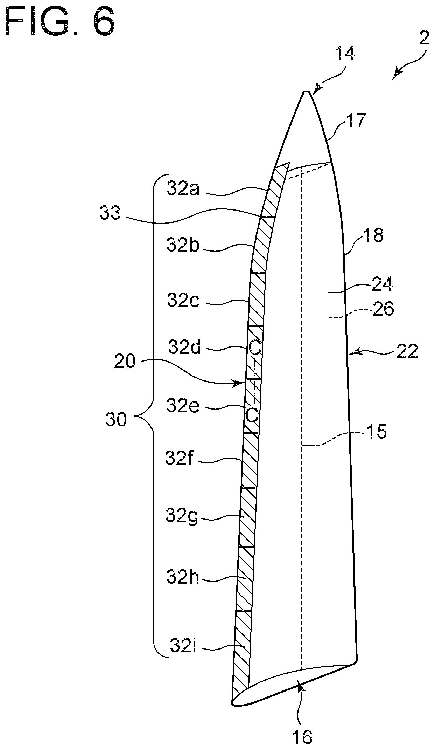

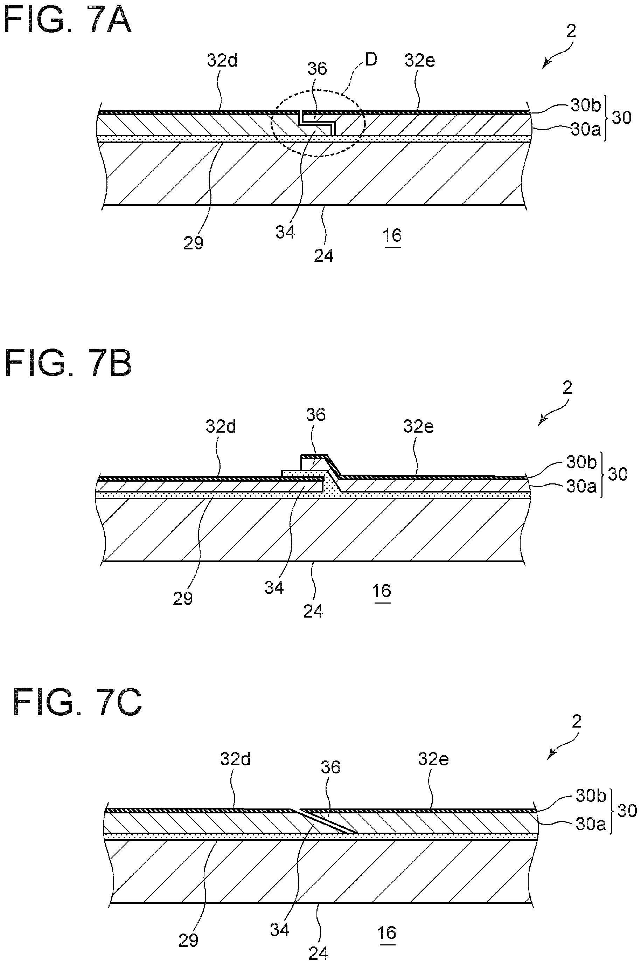

Here, FIG. 6 is a schematic diagram showing the blade tip portion 14 side of the wind turbine blade 2 according to another embodiment. FIGs. 7A to 7C are cross-sectional views taken along line C-C in FIG. 6 according to some embodiments. The leading edge protector 30 provided at the leading edge portion 20 includes a plurality of protector members 32a to 32i arranged along the blade longitudinal direction of the blade body 18, as shown in FIG. 6. When the leading edge protector 30 is composed of the plurality of protector members 32a to 32i, even in a wind turbine blade 2 that is large along the blade longitudinal direction of the blade body 18, it is possible to protect the leading edge portion 20 from erosion damage over a wide range.

As shown in FIGs. 7A to 7C, the plurality of protector members 32a to 32i may be arranged such that a pair of end portions 34, 36 of two adjacent protector members overlap each other. Thereby, it is possible to absorb strain that may occur in the leading edge protector 30 due to deformation or thermal expansion of the wind turbine blade 2 during operation of the wind turbine 1, and to prevent erosion damage caused by a gap between two adjacent protector members.

Further, the pair of end portions 34, 36 may have mutually complementary shapes, as shown in FIGs. 7A to 7C. For example, in FIG. 7A, the end portion 34 of the protector member 32d has a cross-sectional shape in which the upper layer side is partially cut off so as to partially reduce the thickness, while the end portion 36 of the protector member 32e has a cross-sectional shape in which the lower layer side is partially cut off so as to partially reduce the thickness, whereby they have mutually complementary shapes. Alternatively, in FIG. 7B, the end portion 36 of the protector member 32e covers the upper layer side of the end portion 34 of the protector member 32d. Alternatively, in FIG. 7C, the end portion 34 of the protector member 32d is flat on the lower layer side and is tapered toward the distal end, while the end portion 36 of the protector member 32e is flat on the upper layer side and is tapered toward the distal end, whereby they have mutually complementary shapes.

The shapes of the pair of end portions 34, 36 shown in FIGs. 7A to 7C are merely illustrative, and the end portions may have other shapes.

Each protector member may be secured to the skin of the blade body 18 via an adhesive layer 29. The adhesive layer 29 may be inserted between the pair of end portions 34, 36 as shown in FIG. 7B, or may not be inserted between the pair of end portions 34, 36 as shown in FIGs. 7A and 7C.

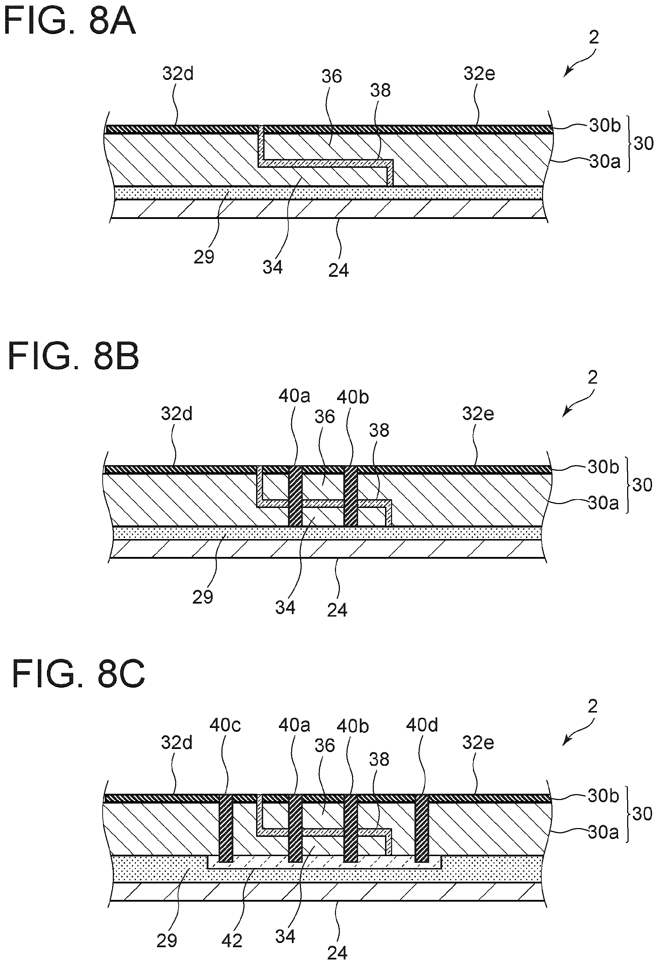

FIGs. 8A to 8C are each an enlarged cross-sectional view showing a variation of the region D in FIG. 7A. As shown in FIG. 8A, the pair of end portions 34, 36 may be arranged with a highly elastic layer 38 having higher elastic modulus than the body layer 30a being interposed therebetween. The highly elastic layer 38 may be made of, for example, polyurethane resin, polyester resin, fluororesin, acrylic adhesive, or epoxy adhesive. Thereby, the highly elastic layer 38 absorbs thermal expansion or deformation that may occur in the wind turbine blade 2 during operation of the wind turbine 1 to effectively reduce strain of the wind turbine blade 2.

Further, as shown in FIG. 8B, the pair of end portions 34, 36 may be secured to each other by first bolt members 40a, 40b penetrating the pair of end portions 34, 36. The first bolt members 40a, 40b extend across the pair of end portions 34, 36 in the thickness direction of the skin to connect the protector members 32d, 32e having the pair of end portions 34, 36 to each other. This improves the adhesion strength between the pair of end portions 34, 36, and allows the leading edge protector 30 to have higher reliability. Further, when the first bolt members 40a, 40b are made of a conductive material, the contact resistance between each protector member can be reduced by the first bolt members 40a, 40b, so it is possible to improve the lightning resistance performance, for example, by reducing Joule heat caused by the lightning current generated in the leading edge protector 30 when the wind turbine blade 2 is struck by lightning.

FIG. 8B shows two first bolt members, but the number of first bolt members may be any number.

As shown in FIG. 8C, two adjacent protector members 32d, 32e may be connected via a connection plate 42 disposed between the leading edge protector 30 and the skin (suction-side skin 24 or pressure-side skin 26) of the blade body 18. In this case, the first bolt members 40a, 40b may secure the connection plate 42 together with the pair of end portions 34, 36. This allows the leading edge protector 30 composed of the plurality of protector members 32a to 32i to have high strength, providing the leading edge protector 30 with high reliability. Further, when the connection plate 42 is made of a conductive material, the contact resistance between the plurality of protector members can be reduced by the connection plate 42, so it is possible to improve the lightning resistance performance, for example, by reducing Joule heat caused by the lightning current generated in the leading edge protector 30 when the wind turbine blade 2 is struck by lightning.

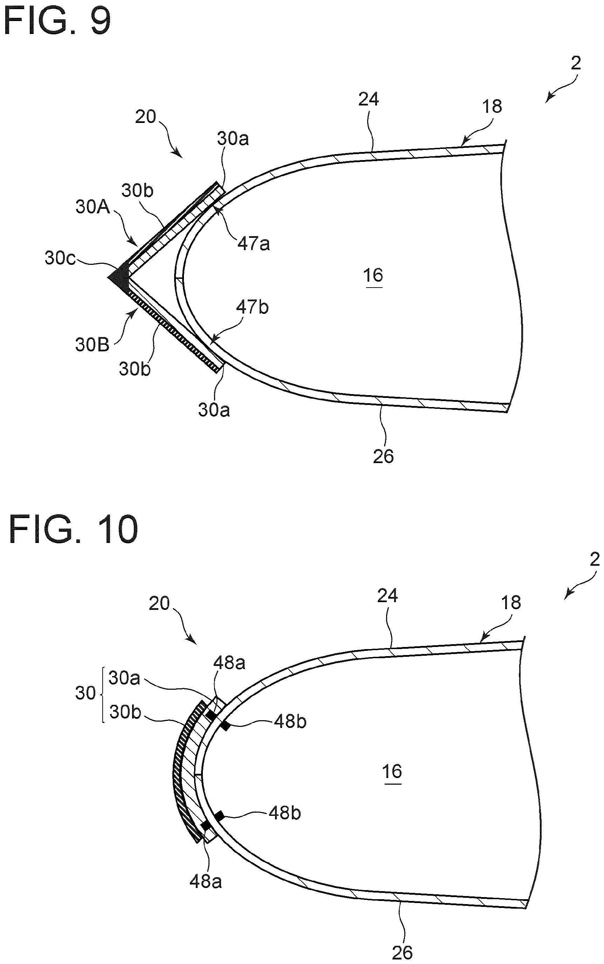

FIG. 9 is a cross-sectional view taken along line A-A in FIG. 2 according to another embodiment. In the embodiment shown in FIG. 9, the leading edge protector 30 includes a first leading edge protector 30A and a second leading edge protector 30B. The first leading edge protector 30A extends from a suction-side secured portion 47a disposed on the suction-side skin 24 of the blade body 18 toward the leading edge side and has a flat plate shape inclined with respect to the blade chord direction of the blade body 18. The second leading edge protector 30B extends from a pressure-side secured portion 47b disposed on the pressure-side skin 26 of the blade body 18 toward the leading edge side and has a flat plate shape inclined with respect to the blade chord direction of the blade body 18.

The first leading edge protector 30A and the second leading edge protector 30B are connected to each other at the leading edge side of the blade body 18. In such a leading edge protector 30, since the first leading edge protector 30A and the second leading edge protector 30B are inclined to the chord direction, during operation of the wind turbine 1, the leading edge portion 20 of the blade body 18 receives raindrops, dust, etc., from the front side obliquely. Thus, the impact caused by raindrops, dust, etc., is reduced, and erosion damage is reduced.

Further, the first leading edge protector 30A and the second leading edge protector 30B are connected to each other via a joint portion 30c having higher hardness than the body layer 30a. The joint portion 30c is formed, for example, by joining the first leading edge protector 30A and the second leading edge protector 30B having flat plate shapes by build-up welding with their edges in abutment. In this case, a welding material with high hardness such as high chromium cast iron is preferably used for the joint portion 30c. By increasing the hardness of the joint portion 30c located on the frontmost side of the wind turbine blade 2, it is possible to more effectively suppress erosion damage caused by raindrops, dust, etc., to the wind turbine blade 2 during operation of the wind turbine 1.

FIG. 10 is a cross-sectional view taken along line A-A in FIG. 2 according to another embodiment. In the embodiment shown in FIG. 10, the leading edge protector 30 includes a first magnet 48a built into the body layer 30a and a second magnet 48b built into the skin (suction- side skin 24 and pressure-side skin 26) of the blade body 18. The first magnet 48a and the second magnet 48b are placed to face each other when the leading edge protector 30 is attached to the leading edge portion 20 of the blade body 18, and the leading edge protector 30 is attached to the blade body 18 by the magnetic attraction generated between the first magnet 48a and the second magnet 48b. Thus, the leading edge protector 30 can be well secured to the blade body 18 by the magnetic attraction generated between the first magnet 48a and the second magnet 48b, and the leading edge protector 30 can be effectively prevented from separating from the blade body 18.

The first magnet 48a and the second magnet 48b may be permanent magnets or electromagnets. When permanent magnets are used as the first magnet 48a and the second magnet 48b, magnets with strong magnetic attraction, such as neodymium magnets, may be used.

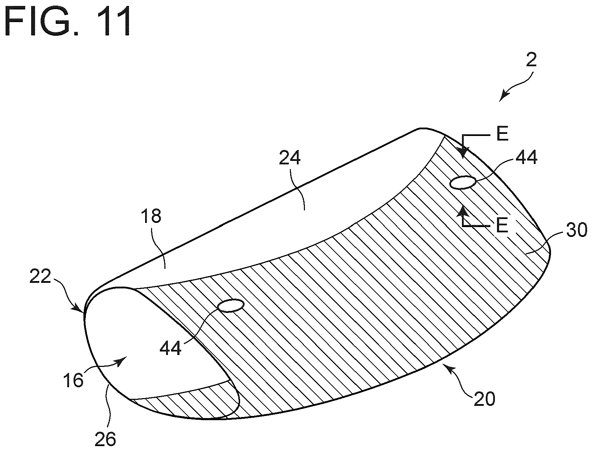

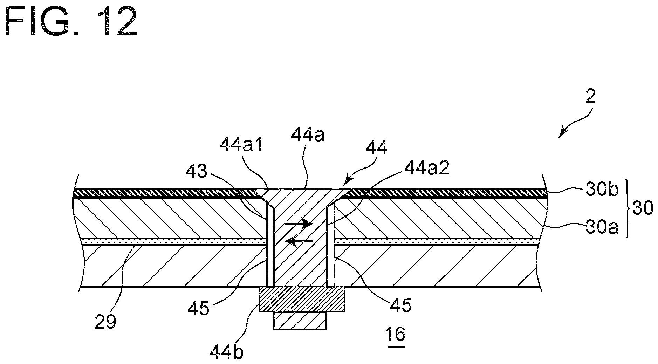

FIG. 11 is a perspective view of the leading edge protector 30 provided at the leading edge portion 20 of the blade body 18 according to an embodiment. FIG. 12 is a cross-sectional view taken along line E-E in FIG. 11. As shown in FIG. 11, the leading edge protector 30 according to each embodiment described above may be secured to the blade body 18 by a fastener structure 44. As shown in FIG. 12A, the fastener structure 44 includes a bolt hole 43 formed from the skin (suction- side skin 24 and pressure-side skin 26) of the blade body 18 to the leading edge protector 30, and a second bolt member 44a capable of engaging with the bolt hole 43. The second bolt member 44a has a head portion 44a1 with large diameter at one end, and a bolt body portion 44a2 passing through the bolt hole 43 at the other end is secured with a nut 44b.

By securing the leading edge protector 30 to the blade body 18 by such a fastener structure 44, for example, even when the fixing force of the adhesive layer 29 that bonds the leading edge protector 30 to the blade body 18 is reduced, the fastener structure 44 can maintain the fixation to the blade body 18, so that the wind turbine blade 2 with higher reliability can be achieved.

The fastener structure 44 has a gap 45 between a side surface of the second bolt member 44a and an inner surface of the bolt hole 43. For example, the gap 45 is formed in a substantially cylindrical shape so as to surround the second bolt member 44a between the head portion 44a1 and the nut 44b. Thereby, when a displacement difference occurs between the leading edge protector 30 and the skin of the blade body 18 due to the thermal elongation or deformation of the wind turbine blade 2 during operation of the wind turbine 1, the shear force (see the arrows shown in FIG. 12) acting along the in-plane direction on the fastener structure 44 can be absorbed by the gap.

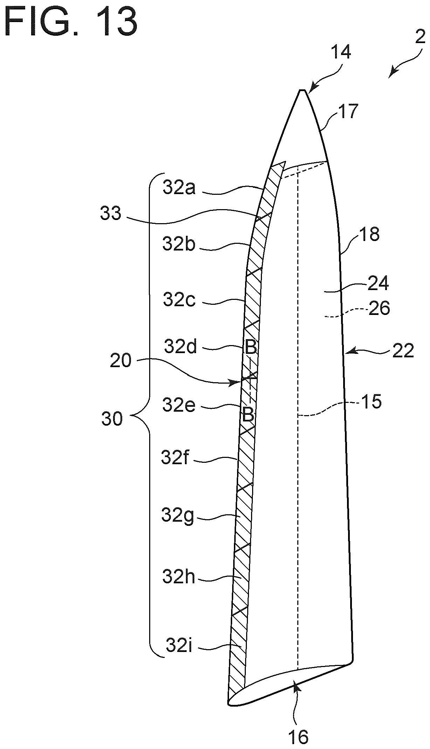

FIG. 13 is a schematic diagram showing the blade tip portion14 side of the wind turbine blade 2 according to another embodiment. In the embodiment shown in FIG. 13, the plurality of protector members 32a to 32i are configured such that a boundary line 33 between two adjacent protector members intersects the blade chord direction of the blade body 18. In other words, the boundary line 33 is inclined with respect to the blade chord direction. The leading edge protector 30 is subjected to stress in a direction of separating from the skin of the blade body 18. Such stress tends to increase in the vicinity of the boundaries of the protector members 32a to 32i which constitute the leading edge protector 30. Therefore, when the boundary line 33 between two adjacent protector members intersects the blade chord direction, the stress is effectively reduced, so it is possible to effectively prevent the leading edge protector 30 from separating from the blade body 18.

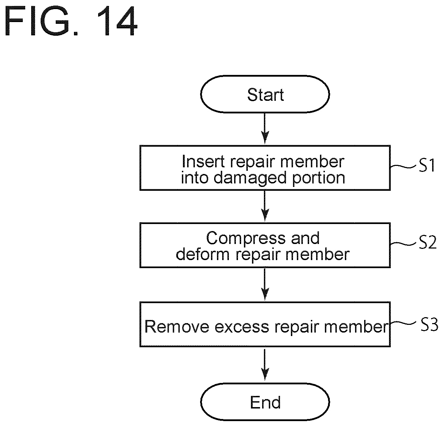

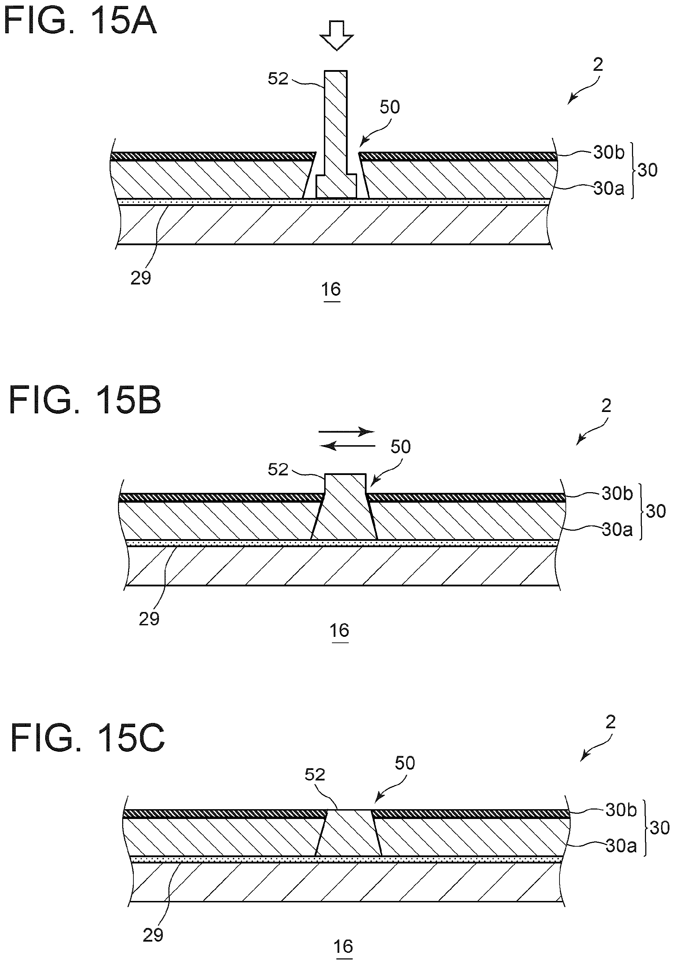

Next, a repair method for the wind turbine blade 2 having the above configuration will be described. FIG. 14 is a flowchart showing steps of a repair method for the wind turbine blade 2 according to an embodiment. FIGs. 15A to 15C are explanatory diagrams corresponding to each step of FIG. 14.

In the present embodiment, the initial state of the wind turbine blade 2 to be repaired is assumed to be the situation as shown in FIG. 15A, where a damaged portion 50 exists in a portion of the leading edge protector 30 on the skin of the leading edge portion 20 of the blade body 18. Although the case where a portion of the leading edge protector 30 is missing is shown here as the damaged portion 50, the form of the damaged portion 50 is not limited to this case.

First, a repair member 52 is inserted into the damaged portion 50 in the leading edge protector 30 (step S1). The repair member 52 includes the same or substitutable similar material as the constituent material of the leading edge protector 30. In the present embodiment, the repair member 52 including the same or substitutable similar material as the constituent material of the body layer 30a, which is the main component of the leading edge protector 30, is used. Further, the repair member 52 has a longitudinal shape that can be inserted into the damaged portion 50.

Then, the repair member 52 inserted into the damaged portion 50 is compressed from the outside to be deformed into a shape corresponding to the damaged portion 50 (step S2). Such compression can be performed, for example, by using a tool such as a hammer on a portion of the repair member 52 inserted in the damaged portion 50 that is exposed from the damaged portion 50. As shown in FIG. 15B, the compressed repair member 52 is deformed in conformity with the shape of the damaged portion 50 and fills a gap generated as the damaged portion 50 in the leading edge protector 30.

Then, the excess repair member 52 exposed from the damaged portion 50 is removed (step S3). In step S2, as shown in FIG. 15B, a portion of the repair member 52 is exposed from the damaged portion 50 and thus is excess. Such exposed excess repair member 52 is removed in step S3 so that the surface of the leading edge protector 30 is flattened after repair, as shown in FIG. 15C.

Thus, according to the repair method of the above-described embodiment, when a damaged portion 50 occurs in the leading edge protector 30 provided at the leading edge portion 20 of the blade body 18, by compressing and deforming the repair member 52 inserted into the damaged portion 50 and then removing the excess portion, the damaged portion 50 can be easily repaired by efficient work.

In addition, the components in the above-described embodiments may be appropriately replaced with known components without departing from the spirit of the present disclosure, or the above-described embodiments may be appropriately combined.

The contents described in the above embodiments would be understood as follows, for instance.
(1) A wind turbine blade (e.g., the above-described wind turbine blade 2) according to an aspect includes: a blade body (e.g., the above-described blade body 18); and a leading edge protector (e.g., the above-described leading edge protector 30) covering a leading edge portion (e.g., the above-described leading edge portion 20) of the blade body. The leading edge protector includes: a body layer (e.g., the above-described body layer 30a); and a coating layer (e.g., the above-described coating layer 30b) having higher hardness than the body layer and at least partially covering a surface of the body layer.
   According to the above aspect (1), the leading edge protector provided at the leading edge portion of the wind turbine blade includes the body layer and the coating layer. The coating layer has higher hardness than the body layer and at least partially covers the surface of the body layer. Such a leading edge protector can be manufactured by, for example, bending the body layer having lower hardness than the coating layer (in other words, softer than the coating layer) in conformity with the leading edge portion, and then forming the coating layer with high hardness on the surface of the body layer. That is, the leading edge protector can be easily installed on the blade body, so that the wind turbine with excellent erosion resistance performance can be obtained.
(2) In another aspect, in the above aspect (1), the coating layer is formed on an outer surface (e.g., the above-described outer surface 30a1) of the body layer facing outside.
   According to the above aspect (2), the coating layer is formed on the outer surface of the body layer facing the outside. Thereby, the coating layer receives raindrops, sand dust, etc., flying from the outside, and thus protects the body layer having lower hardness than the coating layer, resulting in good erosion resistance performance.
(3) In another aspect, in the above aspect (1) or (2), the coating layer is formed on an inner surface (e.g., the above-described inner surface 30a2) of the body layer facing the leading edge portion.
   According to the above aspect (3), in the leading edge portion of the blade body, the coating layer is interposed between the skin of the blade body and the body layer of the leading edge protector. Thereby, for example, by appropriately selecting the material of the coating layer, the body layer can be well secured to the skin of the blade body via the coating layer, and the wind turbine blade with high reliability can be obtained with little risk of separating or falling off of the leading edge protector.
(4) In another aspect, in any one of the above aspects (1) to (3), the leading edge protector includes a plurality of protector members (e.g., the above-described protector members 32a to 32i) arranged along a blade longitudinal direction of the blade body.
   According to the above aspect (4), the leading edge protector includes the plurality of protector members arranged along the blade longitudinal direction. Thereby, even in a wind turbine blade that is large along the blade longitudinal direction of the blade body, it is possible to protect the leading edge portion from erosion damage over a wide range.
(5) In another aspect, in the above aspect (4), the plurality of protector members are arranged such that a pair of end portions (e.g., the above-described pair of end portions 34, 36) of two adjacent protector members overlap each other.
   According to the above aspect (5), the respective end portions of two adjacent protector members of the plurality of protector members constituting the leading edge protector are arranged to overlap each other. Thereby, it is possible to prevent erosion damage caused by a gap between two adjacent protector members.
(6) In another aspect, in the above aspect (5), the pair of end portions are arranged with a highly elastic layer (e.g., the above-described highly elastic layer 38) having higher elastic modulus than the body layer being interposed therebetween.
   According to the above aspect (6), the highly elastic layer is interposed between the respective end portions of two adjacent protector members of the plurality of protector members constituting the leading edge protector. Thereby, the highly elastic layer absorbs thermal expansion or deformation that may occur during operation of the wind turbine to effectively reduce strain of the wind turbine blade.
(7) In another aspect, in the above aspect (5) or (6), the pair of end portions are secured to each other by a first bolt member (e.g., the above-described first bolt members 40a, 40b) penetrating the pair of end portions.
   According to the above aspect (7), the respective end portions of two adjacent protector members of the plurality of protector members constituting the leading edge protector are secured to each other by the first bolt member. This improves the adhesion strength between the pair of end portions and allows the leading edge protector to have higher reliability. Further, when the first bolt member is made of a conductive material, the contact resistance between the plurality of protector members can be reduced by the first bolt member, so it is possible to improve the lightning resistance performance, for example, by reducing Joule heat caused by the lightning current generated in the leading edge protector when the wind turbine blade is struck by lightning.
(8) In another aspect, in the above aspect (7), two adjacent protector members of the plurality of protector members are connected via a connection plate (e.g., the above-described connection plate 42) disposed between the leading edge protector and the blade body, and the first bolt member secures the connection plate together with the pair of end portions.
   According to the above aspect (8), the adjacent protector members are secured together with the connection plate by the first bolt member via the connection plate. This allows the leading edge protector composed of the plurality of protector members to have high strength, providing the leading edge protector with high reliability. Further, when the connection plate is made of a conductive material, the contact resistance between the plurality of protector members can be reduced by the connection plate, so it is possible to improve lightning resistance performance, for example, by reducing Joule heat caused by the lightning current generated in the leading edge protector when the wind turbine blade is struck by lightning.
(9) In another aspect, in any one of the above aspects (4) to (8), the plurality of protector members are configured such that a boundary line (e.g., the above-described boundary line 33) between two adjacent protector members intersects a blade chord direction of the blade body.
   According to the above aspect (9), the boundary line between two adjacent protector members of the plurality of protector members constituting the leading edge protector intersects the blade chord direction. The leading edge protector is subjected to stress in a direction of separating from the skin of the blade body. Such stress tends to increase in the vicinity of the boundaries of the protector members which constitute the leading edge protector. Therefore, when the boundary line between two adjacent protector members intersects the blade chord direction, the stress is effectively reduced, so it is possible to effectively prevent the leading edge protector from separating from the blade body.
(10) In another aspect, in any one of the above aspects (1) to (9), the leading edge protector is secured to the blade body by a fastener structure (e.g., the above-described fastener structure 44) including a bolt hole (e.g., the above-described bolt hole 43) formed from a skin constituting the blade body to the leading edge protector, and a second bolt member (e.g., the above-described second bolt member 44a) capable of engaging with the bolt hole.
   According to the above aspect (10), the leading edge protector is secured to the blade body by the fastener structure including the bolt hole and the second bolt member. Thereby, for example, even when the fixing force of an adhesive that bonds the leading edge protector to the blade body is reduced, the fastener structure can maintain the fixation to the blade body, so that the wind turbine blade with higher reliability can be obtained.
(11) In another aspect, in the above aspect (10), the fastener structure has a gap (e.g., the above-described gap 45) between a side surface of the second bolt member and an inner surface of the bolt hole.
   According to the above aspect (11), the gap is formed between the side surface of the second bolt member and the inner surface of the bolt hole constituting the fastener structure. Thereby, when a displacement difference occurs between the leading edge protector and the skin of the blade body due to the thermal elongation or deformation during operation of the wind turbine, the shear force acting on the fastener structure can be absorbed by the gap.
(12) In another aspect, in any one of the above aspects (1) to (11), the leading edge protector includes: a first leading edge protector (e.g., the above-described first leading edge protector 30A) extending from a suction-side secured portion disposed on a suction-side skin (e.g., the above-described suction-side skin 24) of the blade body toward a leading edge side and having a flat plate shape inclined with respect to a blade chord direction of the blade body; and a second leading edge protector (e.g., the above-described second leading edge protector 30B) extending from a pressure-side secured portion disposed on a pressure-side skin (e.g., the above-described pressure-side skin 26) of the blade body toward the leading edge side and having a flat plate shape inclined with respect to the blade chord direction of the blade body. The first leading edge protector and the second leading edge protector are connected to each other at the leading edge side of the blade body.
   According to the above aspect (12), the leading edge protector includes the first leading edge protector and the second leading edge protector of flat plate shapes. When the first leading edge protector and the second leading edge protector are inclined with respect to the chord direction, the impact caused by raindrops, dust, etc., on the leading edge portion of the blade body during operation of the wind turbine blade can be reduced, so that the erosion damage can be suppressed.
(13) In another aspect, in the above aspect (12), the first leading edge protector and the second leading edge protector are connected to each other via a joint portion (e.g., the above-described joint portion 30c) having higher hardness than the body layer.
   According to the above aspect (13), the first leading edge protector and the second leading edge protector constituting the leading edge protector are connected to each other via the joint portion having high hardness. By increasing the hardness of the joint portion located on the frontmost side, it is possible to more effectively suppress erosion damage caused by raindrops, dust, etc., during operation of the wind turbine blade.
(14) In another aspect, in any one of the above aspects (1) to (13), the wind turbine blade includes: a first magnet (e.g., the above-described first magnet 48a) built into the body layer; and a second magnet (e.g., the above-described second magnet 48b) built into the blade body. The leading edge protector is attached to the blade body by magnetic attraction generated between the first magnet and the second magnet.
   According to the above aspect (14), the leading edge protector can be well secured to the blade body by the magnetic attraction generated between the first magnet and the second magnet. Thereby, it is possible to effectively prevent the leading edge protector from separating from the blade body.
(15) A wind turbine according to an aspect includes the wind turbine blade according to any one of the above aspects (1) to (14).
   According to the above aspect (15), since the wind turbine blade that can effectively suppress erosion damage is included, it is possible to obtain a reliable wind turbine with less maintenance burden.
(16) A repair method for a wind turbine blade according to an aspect is a method for repairing a wind turbine blade (e.g., the above-described wind turbine blade 2) including: a blade body (e.g., the above-described blade body 18); and a leading edge protector (e.g., the above-described leading edge protector 30) covering a leading edge portion (e.g., the above-described leading edge portion 20) of the blade body. The leading edge protector includes: a body layer (e.g., the above-described body layer 30a); and a coating layer (e.g., the above-described coating layer 30b) having higher hardness than the body layer and at least partially covering a surface of the body layer. The method includes a step (e.g., the above-described step S1) of inserting a repair material (e.g., the above-described repair member 52) having a longitudinal shape into a damaged portion (e.g., the above-described damaged portion 50) generated in the leading edge protector; a step (e.g., the above-described step S2) of deforming the repair material into a shape corresponding to the damaged portion by compressing the repair material from outside the damaged portion; and a step (e.g., the above-described step S3) of removing excess of the repair material that is exposed from the damaged portion.

According to the above aspect (16), when a damaged portion occurs in the leading edge protector provided at the leading edge portion of the blade body, by compressing and deforming the repair material inserted into the damaged portion and then removing the excess portion, the damaged portion can be easily repaired by efficient work.

### Reference Signs List

- 1: Wind turbine
- 2: Wind turbine blade
- 4: Hub
- 6: Wind turbine rotor
- 8: Nacelle
- 10: Tower
- 12: Blade root portion
- 14: Blade tip portion
- 15: Down-conductor
- 16: Hollow space
- 17: Tip receptor
- 18: Blade body
- 20: Leading edge portion
- 22: Trailing edge portion
- 24: Suction-side skin
- 26: Pressure-side skin
- 29: Adhesive layer
- 30: Leading edge protector
- 30A: First leading edge protector
- 30B: Second leading edge protector
- 30a: Body layer
- 30a1: Outer surface
- 30a2: Inner surface
- 30b: Coating layer
- 30c: Joint portion
- 32a to 32i: Protector member
- 33: Boundary line
- 34, 36: End portion
- 38: Highly elastic layer
- 40a, 40b: First bolt member
- 42: Connection plate
- 43: Bolt hole
- 44: Fastener structure
- 44a: Second bolt member
- 44a1: Head portion
- 44a2: Bolt body portion
- 44b: Nut
- 45: Gap
- 47a: Suction-side secured portion
- 47b: Pressure-side secured portion
- 48a: First magnet
- 48b: Second magnet
- 50: Damaged portion
- 52: Repair member
- B: Bore
- M1: Aluminum alloy
- M2: Alumite layer

## Claims

1. A wind turbine blade, comprising:
a blade body; and
a leading edge protector covering a leading edge portion of the blade body,
the leading edge protector including:
a body layer; and
a coating layer having higher hardness than the body layer and at least partially covering a surface of the body layer.

2. The wind turbine blade according to claim 1,
wherein the coating layer is formed on an outer surface of the body layer facing outside.

3. The wind turbine blade according to claim 1 or 2,
wherein the coating layer is formed on an inner surface of the body layer facing the leading edge portion.

4. The wind turbine blade according to any one of claims 1 to 3,
wherein the leading edge protector includes a plurality of protector members arranged along a blade longitudinal direction of the blade body.

5. The wind turbine blade according to claim 4,
wherein the plurality of protector members are arranged such that a pair of end portions of two adjacent protector members overlap each other.

6. The wind turbine blade according to claim 5,
wherein the pair of end portions are arranged with a highly elastic layer having higher elastic modulus than the body layer being interposed therebetween.

7. The wind turbine blade according to claim 5 or 6,
wherein the pair of end portions are secured to each other by a first bolt member penetrating the pair of end portions.

8. The wind turbine blade according to claim 7,
wherein two adjacent protector members of the plurality of protector members are connected via a connection plate disposed between the leading edge protector and the blade body, and
wherein the first bolt member secures the connection plate together with the pair of end portions.

9. The wind turbine blade according to any one of claims 4 to 8,
wherein the plurality of protector members are configured such that a boundary line between two adjacent protector members intersects a blade chord direction of the blade body.

10. The wind turbine blade according to any one of claims 1 to 9,
wherein the leading edge protector is secured to the blade body by a fastener structure including a bolt hole formed from a skin constituting the blade body to the leading edge protector, and a second bolt member capable of engaging with the bolt hole.

11. The wind turbine blade according to claim 10,
wherein the fastener structure has a gap between a side surface of the second bolt member and an inner surface of the bolt hole.

12. The wind turbine blade according to any one of claims 1 to 11,
wherein the leading edge protector includes:
a first leading edge protector extending from a suction-side secured portion disposed on a suction-side skin of the blade body toward a leading edge side and having a flat plate shape inclined with respect to a blade chord direction of the blade body; and
a second leading edge protector extending from a pressure-side secured portion disposed on a pressure-side skin of the blade body toward the leading edge side and having a flat plate shape inclined with respect to the blade chord direction of the blade body, and
wherein the first leading edge protector and the second leading edge protector are connected to each other at the leading edge side of the blade body.

13. The wind turbine blade according to claim 12,
wherein the first leading edge protector and the second leading edge protector are connected to each other via a joint portion having higher hardness than the body layer.

14. The wind turbine blade according to any one of claims 1 to 13, comprising:
a first magnet built into the body layer; and
a second magnet built into the blade body,
wherein the leading edge protector is attached to the blade body by magnetic attraction generated between the first magnet and the second magnet.

15. A wind turbine, comprising the wind turbine blade according to any one of claims 1 to 14.

16. A repair method for a wind turbine blade including:
a blade body; and
a leading edge protector covering a leading edge portion of the blade body,
the leading edge protector including:
a body layer; and
a coating layer having higher hardness than the body layer and at least partially covering a surface of the body layer,
the repair method comprising:
a step of inserting a repair material having a longitudinal shape into a damaged portion generated in the leading edge protector;
a step of deforming the repair material into a shape corresponding to the damaged portion by compressing the repair material from outside the damaged portion; and
a step of removing excess of the repair material that is exposed from the damaged portion.
